# EUROPEAN PATENT SPECIFICATION

(11) **EP 0 735 646 B1**
(45) Date of publication and mention of the grant of the patent: **09.06.1999**
(21) Application number: 96300533.5
(22) Date of filing: 25.01.1996
(51) Int. Cl.: H02K 5/22, B60S 1/08

(54) **Structure of a terminal connection in an electric motor with a speed reduction mechanism**
Verbindungsanordnung für die Anschlüsse eines mit einem Geschwindigkeitsuntersetzungsmechanismus ausgestatteten elektrischen Motors
Arrangement pour la connexion des bornes d'un moteur électrique comprenant un mécanisme réducteur de vitesse

(30) Priority: 28.03.1995 JP 9442995
(43) Date of publication of application: 02.10.1996
(73) Proprietor: Mitsuba Corporation Co., Ltd., Kiryu-shi, Gunma-ken (JP)
(72) Inventor: Shoda, Hirokazu, Isesaki-shi, Gunma-ken (JP)
(74) Representative: Smith, Norman Ian

(56) References cited:
- EP-A- 0 603 083
- US-A- 5 194 769
- US-A- 5 218 255
- US-A- 5 309 053

## Description

### BACKGROUND OF THE INVENTION

### Field of the Invention:

The present invention relates to a structure of a terminal connection in an electric motor with a speed reducer which is used for an automotive electric device such as a wiper motor.

### Description of the Related Art:

In the type of motor with speed reducer, a brush holder is fixed to a case frame which supports a worm reducer for reducing the output of the electric motor and an output shaft; a brush terminal electrically connected to the brush which slides and contacts a commutator is provided on the brush holder; a support plate provided with a power terminal, which is electrically connected to a power supply lead wire, is fixed to a case cover; and the case cover is installed from the axial direction of the output shaft with respect to the case frame.

In the case of this type of motor with speed reducer, when mounting the case cover on the case frame, the power terminal and the brush terminal must be inserted to make electrical connection. However, these terminals are conventionally fixed respectively to the brush holder and the case cover; therefore, the terminals must be accurately positioned when installing the case cover to the case frame. This leads to poor work efficiency and an accumulated dimensional tolerance from the case cover, the frame, the brush holder, etc., preventing smooth connection of the terminals in a predetermined position. As a result, the terminals may deform, or stable supply of electric currents may not be secured.

### SUMMARY OF THE INVENTION

Accordingly, an object of the present invention is to provide a structure of a terminal connection in an electric motor with a speed reducer which is capable of solving the problems stated above. To this end, according to the present invention, there is provided a terminal connection structure for or in an electric motor with a speed reducer, comprising: a brush holder, which is fixed to a case frame supporting a worm reducer for reducing the output of the electric motor and an output shaft, is provided with a brush terminal to be electrically connected to a brush which slides and contacts a commutator; and a support plate provided with a power terminal, which is electrically connected to a power supply lead wire, is fixed to a case cover; wherein the case cover is installed from the axial direction of the output shaft with respect to the case frame, thereby electrically connecting the power terminal and the brush terminal; the support plate is divided into a terminal half provided with the power terminal and an output shaft half to be disposed on the output shaft side; and the terminal half is supported in such a manner that it is allowed to move with respect to the output shaft half.

The structure according to the present invention described above permits easy and smooth connection of the brush terminal and the power terminal.

### BRIEF DESCRIPTION OF THE DRAWINGS

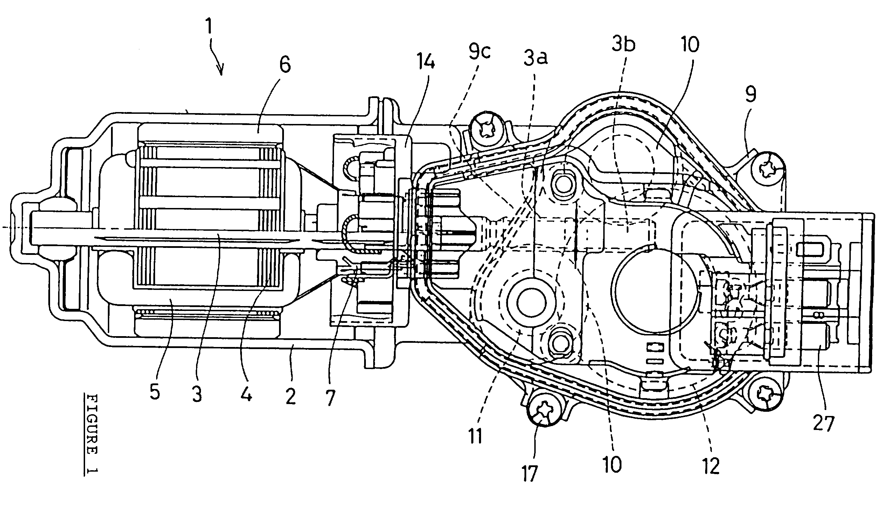

Fig. 1 is a top plan view of a wiper motor with a partial cross-sectional view thereof;

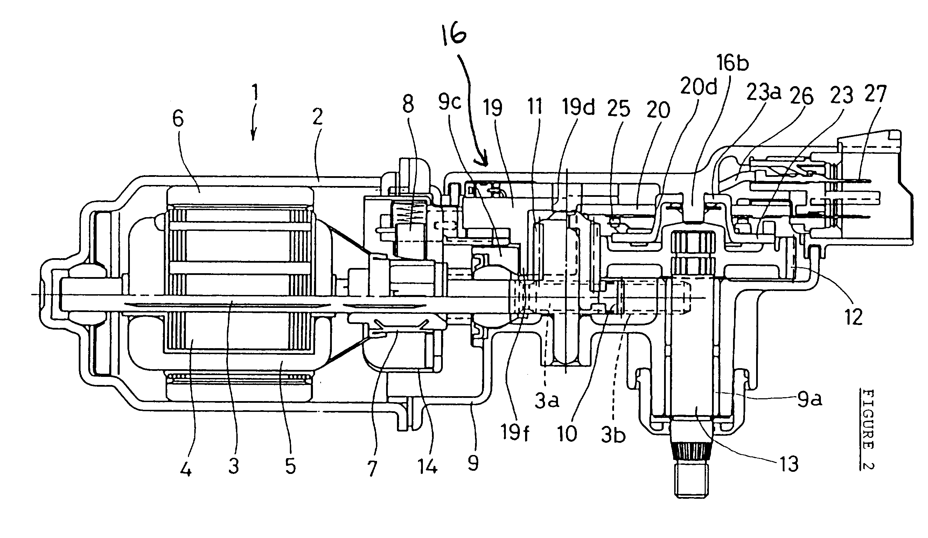

Fig. 2 is a longitudinal cross-sectional view of the wiper motor;
Fig. 3 is a bottom view showing a case cover with a support plate mounted thereon;

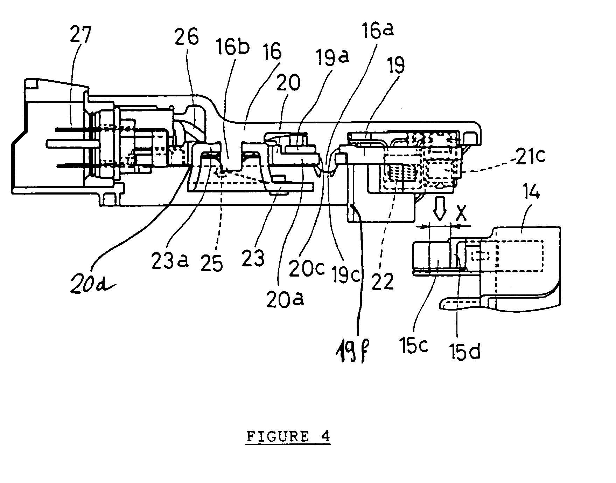

Fig. 4 is a cross-sectional view showing the case cover with the support plate mounted thereon;

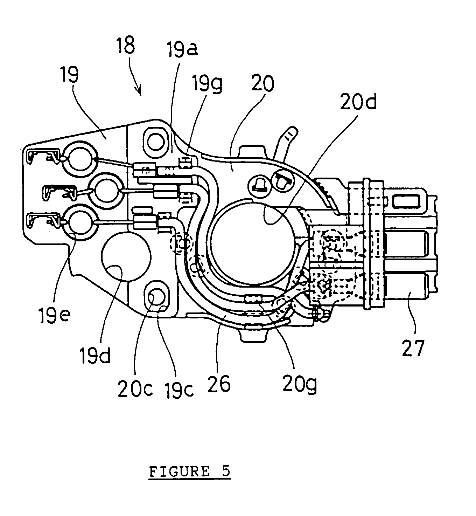

Fig. 5 is a top plan view of the support plate provided with a power supply lead wire;

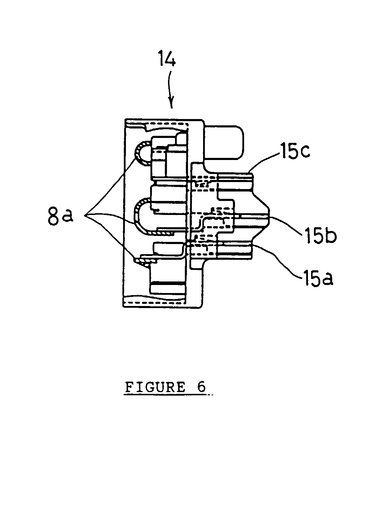

Fig. 6 is a front view of a brush holder with a partial cross-sectional view thereof;

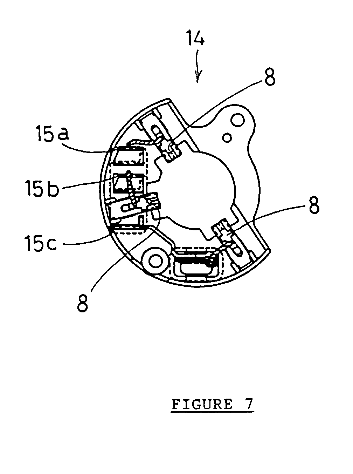

Fig. 7 is a side view of the brush holder;

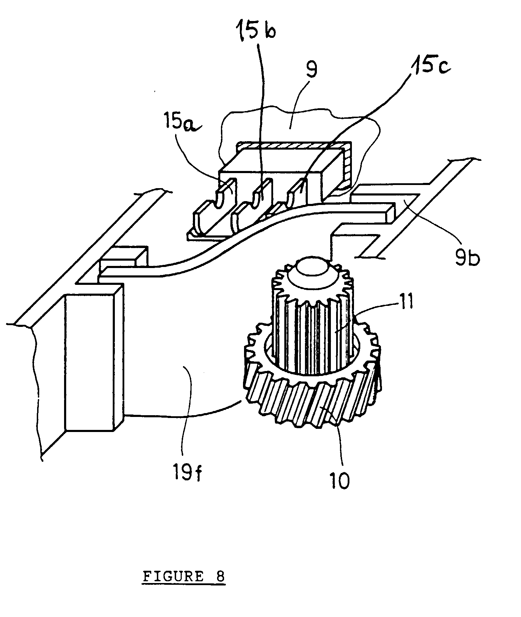

Fig. 8 is a perspective view of a partition wall; and

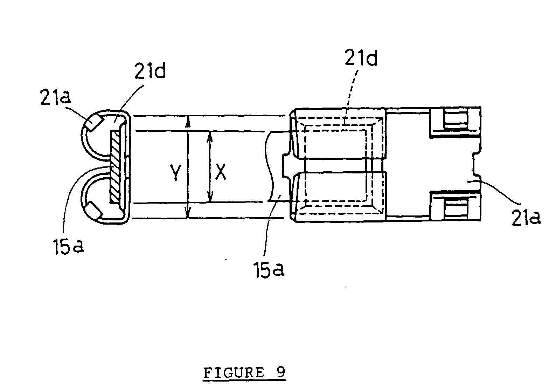

Fig. 9 is a diagram illustrating a brush terminal and a power terminal in a fitted state.

### DESCRIPTION OF THE PREFERRED EMBODIMENT

An embodiment of the present invention will be described in conjunction with the accompanying drawings. In the drawings, reference numeral 1 denotes an electric motor constituting a wiper motor. The electric motor 1 is constructed primarily by a motor shaft 3 rotatably journaled by a bottomed cylindrical yoke 2, an armature core 4 attached to the motor shaft 3, a coil 5 wound around the armature core 4, a permanent magnet 6 attached to the inner circumferential surface of the yoke 2, a commutator 7 attached to the motor shaft 3, and a brush 8 which slides and contacts the commutator 7. The embodiment basically has a similar construction as a conventional electric motor.

Reference numeral 9 denotes a case frame which is integrally assembled to the edge on the opening side of the yoke 2. The distal end of the motor shaft 3 juts out of the yoke 2 into the case frame 9; the distal end of the motor shaft 3 is provided with a pair of worms 3a, 3b having thread grooves which are oriented oppositely from each other; and the worms 3a, 3b have a pair of worm gears 10, 10 which are rotatably supported on the bottom surface of the case frame 9 and which mesh with each other. The worm gears 10, 10 are provided integrally with first gears 11, 11 with a small diameter on the same axis as the worm gears 10, 10; the first gears 11, 11 mesh with a second gear 12 with a large diameter; and an output shaft 13, which is rotatably journaled on the bottom surface of the case frame 9 via a bearing 9a, is attached to the second gear 12 in such a manner that it rotates together with the second gear 12 as one piece. The driving force of the electric motor 3 is reduced via the worms 3a, 3b, the worm gears 10, 10, the first gears 11, 11, and the second gear 12 before it is supplied to the output shaft 13 so as to activate a wiper actuator (not shown) which is interlocked and linked with the output shaft 13.

Reference numeral 14 denotes a brush holder which is fixed to the yoke-side edge of the case frame 9. The brush 8 is supported by the brush holder 14 so that it may be urged toward the commutator 7 and it may be free to move in the inside and outside diameter directions. The part of the brush holder 14 which juts out toward the case frame 9 is provided with three brush terminal pieces 15a, 15b, 15c which are electrically connected via pig tails 8a to the three brushes 8 for low speed, high speed, and grounding, respectively.

Reference numeral 16 denotes a case cover which is fixed, with a screw 17, to the case frame 9 to cover the top opening of the case frame 9. A support plate 18 made of an insulating material, which will be discussed later, is attached to the inner surface of the case cover 16.

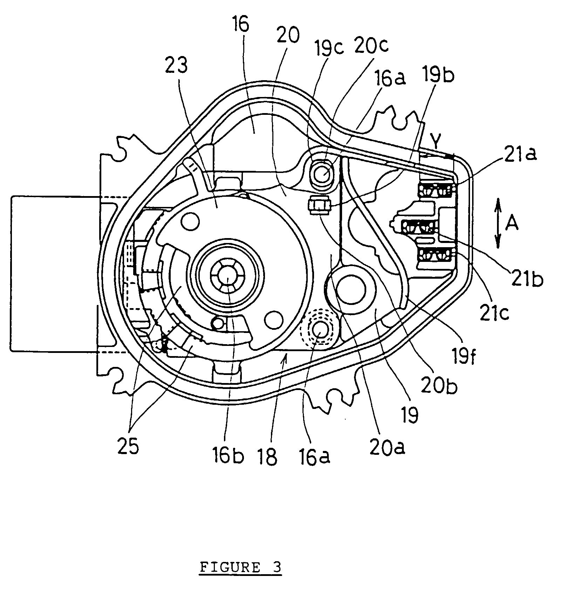

In other words, the support plate 18 is constructed by a half 19 on the terminal side and a half 20 on the output shaft side. The two halves 19 and 20 are respectively provided with laps 19a, 20a which overlap each other when the half 19 on the terminal side is positioned on the inner surface of the case cover 16. A retaining hook 19b, which projects from the lap 19a of the half on the terminal side, is loosely inserted in an engaging hole 20b formed in the lap 20a of the half on the output shaft side so as to support the half 19 on the terminal side in such a manner that it freely slides in direction A in Fig. 3 with respect to the half 20 on the output shaft side.

The laps 19a and 20a of the two halves 19 and 20 are further provided with through holes 19c and 20c into which two fixing projections 16a, which jut out from the inner surface of the case cover 16 toward the case frame 9, are inserted. The through hole 19c in the half 19 on the terminal side has a large-diameter slot in the vertical direction, i.e. direction A, in Fig. 3, whereas the through hole 20c in the half 20 on the output shaft side has a small diameter. Thus, the half 20 on the output shaft side can be fixed to the case cover 16 while allowing the half 19 on the terminal side to move, by loosely inserting the fixing projection 16a on the case cover 16 into the large-diameter through hole 19c of the half 19 on the terminal side and by inserting it in the small-diameter through hole 20c in the half 20 on the output shaft side to retain it.

The half 19 on the terminal side is equipped with three power terminals 21a, 21b, and 21c which are to be electrically connected to the three brush terminal pieces 15a, 15b, and 15c of the brush holder 14. The power terminals 21a, 21b, and 21c have a fitting groove 21d which slidably fits to the brush terminal pieces 15a, 15b, and 15c in the axial direction of the output shaft 13. Width X of the brush terminal pieces 15a, 15b, and 15c and width Y of the fitting groove 21d of the power terminals 21a, 21b, and 21c are set to establish a relationship of X < Y. These brush terminal pieces 15a, 15b, and 15c and the power terminals 21a, 21b, and 21c are so configured that the brush terminal pieces 15a, 15b, and 15c fit in the fitting groove 21d of the power terminals 21a, 21b, and 21c to make electrical connection by installing the case cover 16, to which the support plate 18 has been attached in advance, from the axial direction of the output shaft 13 in relation to the case frame 9 to which the brush holder 14 has been fixed. At this time, one side of the fitting groove 21d engages with an engaging groove 15d formed in the brush terminal pieces 15a, 15b, and 15c. Since there is the relationship expressed by X < Y as mentioned above, the brush terminal pieces 15a, 15b, and 15c are allowed to slide within the range of the width of the fitting groove 21d, thus making it possible to absorb the dimensional tolerance in the axial direction of the motor shaft 3 when the brush terminal pieces 15a, 15b, and 15c fit with the power terminals 21a, 21b, and 21c. Furthermore, all the terminals 15a, 15b, 15c, 21a, 21b, and 21c are installed so as to provide predetermined clearances at the brush holder 14 and the half 19 on the terminal side; therefore, the dimensional tolerance between adjoining terminals can be absorbed when connecting a plurality of terminals as in the case of this embodiment.

Further, the half 19 on the terminal side is equipped with a through hole 19d, in which the journal of the first gear 11 is inserted, and a coil enclosure 19e for housing a noise suppressor coil 22. Provided on the side surface of the case frame 9 of the half 19 on the terminal side is a partition wall 19f for partitioning the terminal connection between the power terminals 21a, 21b, and 21c and the brush terminal pieces 15a, 15b, and 15c from the gear meshing section of the worms 3a, 3b, the worm gears 10, 10, the first gears 11, 11, and the second gear 12. Thus, the partition wall 19f prevents the lubricant such as grease, which is applied to the gear meshing section, from leaking into the terminal connection.

Incidentally, both edges of the partition wall 19f are formed in accordance with the direction, i.e. direction A in Fig. 3, in which the half 19 on the terminal side slides and engages loosely in a labyrinth mode with an engaging groove 9b formed in the side surface of the case frame 9 and they are located closely to a stepped section 9c formed to approximately follow the contour of the partition wall 19f. This allows the half 19 on the terminal side to move with respect to the case frame 9. In addition, the labyrinth structure effectively prevents the leakage of lubricant.

A contact plate 23, which rotates integrally with the second gear 12, is retained to the case cover 16 of the second gear 12. A central part 23a of the contact plate 23 is inserted in a through hole 20d formed in the half 20 on the output shaft side and it is rotatably journaled by a shaft supporting section 16b provided on the case cover 16. A relay plate 25, which slides and contacts the contact plate 23, is mounted on the outer circumferential section of the through hole 20d of the half 20 on the output shaft side. As the electric motor 1 drives the second gear 12 forward or reversely, the relay plate 25 touches or leaves the current-carrying section of the contact plate 23, thereby controlling the supply of power to the power supply lead wire 26 which will be discussed in detail later. of the support plate 18

Reference numeral 27 denotes a power connecting terminal which is provided on a portion of the support plate 18 on the opposite side from that where the electric motor 1 is disposed. The power connecting terminal 27 is comprised of one end of the power supply lead wire 26, which one end is electrically connected, and a part of the relay plate 25, which part is bent. Formed on the side surface of the case cover 16 of the half 19 on the terminal side and the half 20 on the output shaft side are retaining sections 19g and 20g for retaining the power supply lead wire 26. The power supply lead wire 26 extending from the power connecting terminal 27 are retained by the retaining sections 19g and 20g of the two halves 19 and 20 and it reaches the noise suppressor coil 22; it is further electrically connected from the noise suppressor coil 22 to the power terminals 21a, 21b, and 21c. Thus, currents are supplied to the brush 8 via the power connecting terminal 27, the power supply lead wire 26, the power terminals 21a, 21b, 21c, and the brush terminal pieces 15a, 15b, 15c.

In the embodiment of the present invention which is configured as described above, to install the case cover 16 onto the case frame 9, the brush holder 14 is attached to the case frame 9 and the necessary components such as the worm gears 10, 10, the first gears 11, 11, the second gear 12, and the output shaft 13 are installed beforehand. The support plate 18, to which the power supply lead wire 26 has been attached, the contact plate 23, and the relay plate 25 are installed to the case cover 16 in advance. Then, the case cover 16 is installed from the axial direction of the output shaft 13 with respect to the case frame 9. This fits the power terminals 21a, 21b, and 21c provided on the half 19 on the terminal side of the support plate 18 to the brush terminal pieces 15a, 15b, and 15c provided on the brush holder 14, thereby making electrical connection between the terminals 15a, 15b, 15c and the terminals 21a, 21b, 21c. In this case, since the half 19 on the terminal side is supported slidably with respect to the half 20 on the output shaft side as previously described, the half 19 on the terminal side can be installed while moving it to accomplish proper positioning of the power terminals 21a, 21b, and 21c in relation to the brush terminal pieces 15a, 15b, and 15c.

Thus, in the embodiment of the present invention, installing the case cover 16 onto the case frame 9 permits the connection of the brush terminal pieces 15a, 15b, and 15c to the power terminals 21a, 21b, and 21c. In this case, the support plate 18 on which the power terminals 21a, 21b, and 21c are mounted is divided into two sections, namely, the half 20 on the output shaft side which is integrally supported by the case cover 9 and the half 19 on the terminal side which is movably supported by the half 20 on the output side, the power terminals 21a, 21b, and 21c being provided on the half 20 on the terminal side. As a result, when installing the case cover 16 onto the case frame 9, the half 19 on the terminal side can be moved for accurate positioning of the power terminals 21a, 21b, 21c and the brush terminals 15a, 15b, 15c. This makes it possible to absorb the dimensional tolerances, machining errors, or assembly errors of the components such as the case frame 9, the brush holder 14, the case cover 16, and the support plate 18, thus permitting easier installation; it also makes it possible to prevent the brush terminal pieces 15a, 15b, 15c and the power terminals 21a, 21b, 21c from deforming due to assembly accompanied by undue stress.

Incidentally, although the half 19 on the terminal side is supported so that it may be moved with respect to the half 20 on the output shaft side as previously stated, the power supply lead wire 26 is retained on the retaining sections 19g, 20g for holding the lead wire which are formed on the side surface of the case cover 16 of the two halves 19 and 20; therefore, the two halves 19 and 20 are integrally combined in an elastic manner by the power supply lead wire 26, preventing the half 19 on the terminal side from rattling.

Thus, since the present invention is configured as stated above, installing the case cover onto the case frame enables the connection between the brush terminals provided on the brush holder fixed to the case frame and the power terminals provided on the support plate fixed to the case cover. The support plate is divided into the half on the terminal side where the power terminals are provided and the half on the output shaft side which is disposed on the output shaft side; and the half on the terminal side is movably supported by the half on the output side. As a result, when installing the case cover onto the case frame, the half on the terminal side can be moved for accurate positioning of the power terminals and the brush terminals. This makes it possible to absorb the dimensional tolerances, machining errors, or assembly errors of the components such as the case frame, the brush holder, the case cover, and the support plate, thus permitting easier installation; it also makes it possible to prevent the terminals from deforming due to assembly accompanied by undue stress.

## Claims

1. A terminal connection structure for or in an electro motor (1) having a speed reducer, said structure comprising:
a brush holder (14), which is fixed to a case frame (9) supporting a worm reducer (10, 10) for decelerating the output of the electric motor and an output shaft (3), and which is provided with a brush terminal (15a, 15b, 15c) electrically connected to a brush (8) which can slide and contact a commutator (7); and
a support plate (18) fixed to a case cover (16) and provided with a power terminal (27) which is electrically connected to a power supply lead wire (26);
wherein said case cover (16) is installed from the axial direction of said output shaft (3) with respect to said case frame (9), thereby electrically connecting said power terminal and said brush terminal (15a, 15b, 15c);
said support plate 18 is divided into a terminal half (19) provided with said power terminal (27) and an output shaft half (20) which is disposed on the output shaft side; and
said terminal half (19) is supported in such a manner that it can move with respect to said output shaft half (20).

2. A terminal connection structure according to claim 1, wherein the terminal half (19) and the output shaft half (20) are respectively provided with laps (19a, 20a) which overlap when the terminal half (19) is positioned on the inner surface side of the case cover (16), and a retaining hook (19b), which projects from the terminal half (19), is loosely inserted in an engaging hole (20b) formed in the output shaft half (20) so as to support the terminal half in such a manner that it can move.

3. A terminal connection structure according to claim 2, wherein the terminal half (19) is provided with a large-diameter through hole (19c) and the output shaft half (20) is provided with a small-diameter through hole (20c) in a position corresponding to the position of the large-diameter through hole (19c), and a fixing projection (16a), which protrudes from the inner surface of the case cover (16) toward the case frame (9), is inserted and retained in the small-diameter through hole (20c) while it is loosely located in the large-diameter through hole (19c), thereby fixing the output shaft half (20) to the case cover (16) in such a manner that the terminal half can move.

4. A terminal connection structure according to claim 2 or 3, wherein lead wire retaining sections (19g, 20g) are provided on a surface, which is opposite and faces the inner surface of the case cover (16) of both halves (19, 20), to retain a power supply lead wire (26) onto the lead wire retaining sections (19g, 20g).

5. A terminal connection structure according to claims 1 to 4, wherein the terminal half (19) is provided with a partition wall (19f) which partitions the speed reducer from the terminal connected portion in cooperation with the case frame (9).

## Patentansprüche

1. Klemmenanschlußanordnung für einen oder in einem Elektromotor (1) mit einem Untersetzungsgetriebe, mit folgendem:
einem Bürstenhalter (14), der an einem Gehäusekörper (9) befestigt ist, der ein Schnecken-Untersetzungsgetriebe (10, 10) zum Verzögern der Ausgabe des Elektromotors und eine Abtriebwelle (3) trägt und der mit einer Bürstenfahne (15a, 15b, 15c) versehen ist, die elektrisch mit einer Bürste (8) verbunden ist, die gleiten und einen Kommutator (7) kontaktieren kann; und
einer an einer Gehäuseabdeckung (16) befestigten Tragplatte (18), die mit einer Stromklenme (27) versehen ist, die elektrisch mit einem Stromversorgungsleitungsdraht (26) verbunden ist;
wobei die besagte Gehäuseabdeckung (16) aus der axialen Richtung der besagten Abtriebwelle (3) in bezug auf den besagten Gehäusekörper (9) installiert wird und dadurch die besagte Stromklemme und die besagte Bürstenfahne (15a, 15b, 15c) elektrisch verbindet;
die besagte Tragplatte (18) in eine mit der besagten Stromklemme (27) versehene Klemmenhälfte (19) und eine Abtriebwellenhälfte (20), die auf der Abtriebwellenseite angeordnet ist, geteilt ist; und
die besagte Klemmenhälfte (19) so getragen wird, daß sie sich in bezug auf die besagte Abtriebwellenhälfte (20) bewegen kann.

2. Klemmenanschlußanordnung nach Anspruch 1, wobei die Klemmenhälfte (19) und die Abtriebwellenhälfte (20) jeweils mit Überlappungen (19a, 20a) versehen sind, die sich überlappen, wenn die Klemmenhälfte (19) auf der Innenflächenseite der Gehäuseabdeckung (16) positioniert ist, und ein von der Klemmenhälfte (19) abstehender Haltehaken (19b) locker in ein in der Abtriebwellenhälfte (20) ausgebildetes Eingriffsloch (20b) eingefügt wird, um die Klemmenhälfte so zu tragen, daß sie sich bewegen kann.

3. Klemmenanschlußanordnung nach Anspruch 2, wobei die Klemmenhälfte (19) mit einer Durchbohrung (19c) mit großem Durchmesser versehen ist und die Abtriebwellenhälfte (20) mit einer Durchbohrung (20c) mit kleinem Durchmesser in einer der Lage der Durchbohrung (19c) mit großem Durchmesser entsprechenden Lage versehen ist und ein Befestigungsvorsprung (16a), der von der Innenfläche der Gehäuseabdeckung (16) auf den Gehäusekörper (9) zu vorsteht, in die Durchbohrung (20c) mit kleinem Durchmesser eingefügt und dort festgehalten wird, während sie sich locker in der Durchbohrung (19c) mit großem Durchmesser befindet, wodurch die Abtriebwellenhälfte (20) so mit der Gehäuseabdeckung (16) befestigt wird, daß sich die Klemmenhälfte bewegen kann.

4. Klemmenanschlußanordnung nach Anspruch 2 oder 3, wobei Leitungsdrahthalteteile (19g, 20g) auf einer gegenüberliegenden Fläche gegenüber der Innenfläche der Gehäuseabdeckung (16) beider Hälften (19, 20) vorgesehen sind, um einen Stromversorgungsleitungsdraht (26) auf den Leitungsdrahthalteteilen (19g, 20g) festzuhalten.

5. Klemmenanschlußanordnung nach Ansprüchen 1 bis 4, wobei die Klemmenhälfte (19) mit einer Trennwand (19f) versehen ist, die das Untersetzungsgetriebe von dem mit der Klemme verbundenen Teil in Zusammenwirkung mit dem Gehäusekörper (9) abtrennt.

## Revendications

1. Un arrangement pour la connexion des bornes d'un moteur électrique (1) comprenant un réducteur de vitesse, ledit agencement comportant :
un porte-balai (14), lequel est fixé au bâti d'un boîtier (9) supportant un réducteur à vis sans fin (10, 10) pour décélérer la sortie du moteur électrique et un arbre de sortie (3), et qui est muni d'une borne de balai (15d, 15b, 15c) connectée électriquement à un balai (8) qui peut coulisse et venir en contact avec un commutateur (7) ; et
une plaque de support (18) fixée à un couvercle de boîtier (16) et munie d'une borne d'énergie électrique (27), laquelle est connectée électriquement à un câble d'amenée d'énergie électrique (26) ;
dans lequel ledit couvercle de boîtier (16) est monté dans la direction axiale dudit arbre de sortie (3) par rapport audit bâti du boîtier (9), en connectant ainsi électriquement ladite borne d'énergie électrique et ladite borne de balai (15a, 15b, 15c);
ladite plaque de support (18) est divisée en une moitié de bornes (19) munie de ladite borne puissance (27) et une moitié d'arbre de sortie (20) qui est disposée sur le côté de l'arbre de sortie ; et
ladite moitié de bornes (19) est supportée de telle manière qu'elle puisse se déplacer par rapport à ladite moitié d'arbre de sortie (20).

2. Un arrangement de connexion de bornes selon la revendication 1, dans lequel la moitié de bornes (19) et la moitié d'arbre de sortie (20) sont respectivement munies de recouvrements (19a, 20a) qui se chevauchent lorsque la moitié de bornes (19) est mise en place sur le côté de surface interne du couvercle de boîtier (16), et un crochet de retenue (19b), lequel fait saillie de la moitié de bornes (19), est inséré de manière lâche dans un trou d'engagement (20b) formé dans la moitié d'arbre de sortie (20) de manière à supporter la moitié de bornes de façon à ce qu'elle puisse se déplacer.

3. Un arrangement de connexion de bornes selon la revendication 2, dans lequel la moitié de bornes (19) présente un trou traversant de grand diamètre (19c) et la moitié d'arbre de sortie (20) présente un trou traversant de petit diamètre (20c) dans une position correspondant à la position du trou traversant de grand diamètre (19c), et une saillie de fixation (16a), laquelle fait saillie de la surface interne du couvercle de boîtier (16) en direction du bâti de boîtier (9), est insérée et retenue dans le trou traversant de petit diamètre (20c) alors qu'elle est mise en place de manière lâche dans le trou traversant de grand diamètre (19c), en fixant ainsi la moitié d'arbre de sortie (20) sur le couvercle de boîtier (16) de telle manière que la moitié de bornes puisse se déplacer.

4. Un arrangement de connexion de bornes selon la revendication 2 ou 3, dans lequel des sections de retenue de câble d'alimentation (19g, 20g) sont prévues sur une surface qui est opposée et dirigée vers la surface interne du couvercle de boîtier (16) des deux moitiés (19, 20) pour retenir un câble d'alimentation en énergie électrique (26) sur les sections de retenue de câble d'alimentation (19g, 20g).

5. Un arrangement de connexion de bornes selon les revendications 1 à 4, dans lequel la moitié de bornes (19) est munie d'une cloison (19f) qui sépare le réducteur de vitesse de la partie connectée aux bornes en coopération avec le bâti de boîtier (9).
